# DEMANDE DE BREVET EUROPEEN

(11) **EP 4 083 855 A1**
(43) Date de publication de la demande: **02.11.2022**
(21) Numéro de dépôt: 22170274.9
(22) Date de dépôt: 27.04.2022
(51) Int. Cl.: G06K 9/00

(54) **PROCÉDÉ DE CONFIGURATION DE ZONES D'INTÉRÊTS DANS UNE IMAGE ET SON DÉTECTEUR DE PRÉSENCE**

(30) Priorité: 28.04.2021 FR 2104443
(71) Demandeur: Legrand France, 87000 Limoges (FR); Legrand SNC, 87000 Limoges (FR)
(72) Inventeur: BEBIEN, William, 87350 PANAZOL (FR); SABOURDY, Alain, 87100 LIMOGES (FR); DEMURGER, Victorien, 71170 SAINT IGNY DE ROCHE (FR)
(74) Mandataire: Cabinet Camus Lebkiri

(57) **Abrégé**

Un aspect de l'invention concerne un procédé de configuration (C) d'au moins une zone d'intérêt situé dans un champ de vision d'un détecteur de présence, comprenant :
- une étape d'acquisition (C1) de caractéristiques physiques de l'espace (E) dans lequel le détecteur de présence devra détecter des présences,
- une étape de sélection (C2) d'une image prédéterminée (I1) en fonction des caractéristiques, comprenant un agencement de zones d'intérêts,
- une étape de détermination d'indexation (C3) du détecteur de présence (1, 1') sur l'image (11, I7) sélectionnée,
- une étape de préréglage (C4) d'au moins une zone d'intérêt comprenant une sous étape de définition (C41) de chaque zone d'intérêt et une sous étape de configuration (C42) d'au moins une zone d'intérêt dans l'image configurée (11, I7),
- une dernière étape de transmission (C5) de données (1211) d'au moins une zone d'intérêt configurée, au détecteur de présence.

## Description

### DOMAINE TECHNIQUE DE L'INVENTION

Le domaine technique de l'invention est celui de la détection de présence. En particulier, il se situe le domaine de la gestion des espaces et de l'éclairage dans le bâtiment tertiaire et résidentiel.

La présente invention concerne un procédé de configuration de zones d'intérêts d'une image d'un détecteur de présence. L'invention a ainsi une application privilégiée mais non limitative dans le domaine de la surveillance de bureau et notamment de la détection de places de bureau inoccupées dans un open space et contrôle et de commande de dispositifs domotique.

### ARRIERE-PLAN TECHNOLOGIQUE DE L'INVENTION

La détection des places de bureaux inoccupées dans un open-space ou de bureau individuel est un enjeu important aujourd'hui pour permettre d'identifier les places de bureaux disponibles et optimiser le temps de recherche par l'utilisateur d'une place d'un bureau disponible.

Plusieurs solutions ont été mises au point ces dernières années afin de faciliter l'utilisateur à se rendre à une place disponible ou pour réserver une salle de réunion ou un bureau inoccupé. Des solutions s'appuient sur différents types de capteurs de mouvement pour déterminer une pièce vide ou une présence dans une pièce, mais celles-ci ne fonctionnent pas pour des zones comprenant plusieurs places disponibles.

Pour permettre d'identifier plusieurs zones facilement, des solutions de vidéo intelligente permettant d'identifier la présence dans différentes zones d'une image ont été proposées. Il existe donc des caméras qui transmettent des images à un dispositifs de détection de présence par zone permettant d'identifier la présence dans chaque zone configurée par ce dispositif de détection qui est généralement un ordinateur. Cependant, l'image transmise à l'ordinateur requiert soit l'installation de câbles soit des moyens sans fil qui consomment une grande partie de bande passante et qui sont énergivore. Il existe aussi des détecteurs de présence par zone autonome comprenant sa propre caméra, toutefois ces solutions requièrent une configuration pour déterminer les zones sur l'image impliquant un temps de configuration important et une configuration lourde et nécessite un taux de transfert important entre le dispositif de configuration (par exemple ordinateur ou téléphone) et le dispositif de détection de présence par zone.

Il existe donc un besoin d'avoir un procédé de configuration simplifié moins gourmand en puissance de calcul.

### RESUME DE L'INVENTION

L'invention offre une solution à au moins un des problèmes évoqués précédemment, en permettant de configurer le détecteur de présence par zone par un dispositif de configuration (par exemple ordinateur ou téléphone) sans transmission de l'image de l'un à l'autre.

Un aspect de l'invention concerne un procédé de configuration d'au moins une zone d'intérêt d'un espace situé dans un champ de vision d'un capteur d'image d'un détecteur de présence, le procédé étant réalisé par un dispositif de configuration comprenant :
- une étape d'acquisition de caractéristiques physiques de l'espace dans lequel le détecteur de présence devra détecter des présences,
- une étape de sélection d'une image prédéterminée en fonction des caractéristiques physiques acquises, l'image comprenant un agencement de zones d'intérêts,
- une étape de détermination d'indexation du détecteur de présence sur l'image sélectionnée comprenant un symbole d'index repère et un symbole de détecteur, déplaçable sur l'image sélectionnée par une interface machine/utilisateur,
- une étape de préréglage d'au moins une zone d'intérêt comprenant une sous étape de définition de chaque zone d'intérêt et une sous étape de configuration d'au moins une zone d'intérêt dans l'image configurée,
- une dernière étape de transmission des données d'au moins une zone configurée par les quatre étapes précédentes au détecteur de présence.

Grâce à l'invention, le procédé permet d'éviter un transfert d'image pour la configuration et donc demande moins de puissance de calcul que dans l'art antérieur tout en étant aussi efficace.

En outre un tel procédé permet d'améliorer la rapidité de configuration pour l'utilisateur. Les caractéristiques physiques de l'espace permettent au dispositif de configuration de proposer une liste d'images de configuration dont les premières correspondent aux caractéristiques physiques de la pièce afin de pouvoir y placer le lieu du détecteur de présence et un index pour permettre d'indexer le détecteur de présence dans l'espace du champ de vision du capteur d'image. L'étape de préréglage d'au moins une zone d'intérêt permet à l'utilisateur d'identifier les zones d'intérêts pour les transmettre au détecteur de présence. Ainsi le détecteur de présence reçoit l'information des zones d'intérêts à surveiller sur l'image du capteur d'image rapidement et sans émettre les vidéos. Par exemple, un tel procédé peut permettre de configurer le détecteur de présence lors de la commande par un réseau internet, par exemple un système comprend sur un serveur un programme de configuration pouvant s'afficher ou télécharger sur une plateforme proposant la configuration du détecteur de présence et le détecteur de présence et pré-configuré à l'usine selon la configuration réalisée sur la plateforme. La plateforme peut être un site internet, une application sur un smartphone pour réaliser la commande etc...

L'invention concerne donc aussi un dispositif de configuration configuré pour réaliser les étapes du procédé de configuration décrit précédemment, le dispositif de configuration étant un appareil différent du détecteur de présence.

L'invention concerne donc aussi un procédé d'initialisation d'un détecteur de présence comprenant un capteur d'image, un moyen de communication et une unité de détection, le procédé comprenant une étape de :
- réception par le moyen de communication de données d'au moins une zone d'intérêt configurée par un dispositif de configuration, dans lequel le détecteur de présence est configuré pour ne pas envoyer de paquet de données comprenant la taille d'une première image du capteur d'image au dispositif de configuration avant la réception de ces données d'au moins une zone d'intérêt,
- configuration par l'unité de détection d'au moins une zone d'intérêt d'un espace situé dans un champ de vision à partir des données d'au moins une zone d'intérêt reçues, pour permettre à un procédé de détection de présence d'identifier une présence dans au moins une zone d'intérêt sur une image reçue du capteur d'image.

L'invention concerne donc aussi un procédé d'initialisation d'un détecteur de présence comprenant un capteur d'image, un moyen de communication et une unité de détection configurée pour réaliser le procédé d'initialisation comprenant une étape de :
- réception par le moyen de communication des données d'au moins une zone d'intérêt définie à surveiller, configurée par un dispositif de configuration,
- une étape de configuration par l'unité de détection d'au moins une zone d'intérêt d'un espace situé dans un champ de vision à partir des données d'au moins une zone d'intérêt reçues, pour permettre à un procédé de détection de présence d'identifier une présence dans au moins une zone d'une image reçue du capteur d'image,
- dans lequel le procédé d'initialisation est dépourvu d'étape de transmission par le moyen de communication de données d'une image provenant du capteur d'image au dispositif de configuration pour réaliser le procédé de configuration des données d'au moins une zone d'intérêt.

Dans ces deux procédés d'initialisation et de configuration, le détecteur ne transmet aucune donnée d'image au dispositif configurateur pour recevoir les données d'au moins une zone d'intérêt configurée par le dispositif de configuration. L'utilisateur peut par le biais du dispositif de configuration configurer les zones non pas à partir d'image de la zone affichée par le dispositif configurateur mais à partir de données de caractéristiques physiques et d'une image préprogrammée choisie par l'utilisateur, potentiellement modifiée. Les données d'au moins une zone d'intérêt définie à surveiller sont donc des données d'emplacement de zone du champ de vision du capteur d'image (sans l'image), par exemple un rectangle d'une certaine taille située à tel endroit du champ de vision du capteur d'image.

L'invention concerne aussi un détecteur de présence comprenant un capteur d'image, un moyen de communication pour recevoir des données de zones d'intérêts définies et configurées par un dispositif de configuration et une unité de détection configurée pour à chaque initialisation attendre la réception par le moyen de communication des données d'au moins une zone d'intérêt définie à surveiller avant de transmettre un paquet de données d'une image reçu du capteur d'image au moyen de communication. Par avant de transmettre un paquet de données d'une image reçu du capteur d'image au moyen de communication on entend que le détecteur de présence peut le faire après la réception des données ou encore est dans l'incapacité ou n'est pas configuré pour le faire avant ou après la réception de ces données.

L'invention concerne aussi un détecteur de présence comprenant un capteur d'image, un moyen de communication pour recevoir des données de zones définie par un dispositif de configuration et une unité de détection configurée pour à chaque re-configuration attendre la réception par le moyen de communication des données d'au moins une zone d'intérêt définie à surveiller avant de recevoir des données d'une image par le capteur d'image.

Un tel détecteur de présence ne requiert donc pas que le capteur d'image enregistre une image de l'espace à détecter pour l'initialisation et donc ni que l'unité de détection puisse transmettre un paquet de données correspondant à celle de l'image par le moyen de communication pour la configuration des zones.

Outre les caractéristiques qui viennent d'être évoquées dans le paragraphe précédent, le procédé de configuration et/ou le procédé d'initialisation et/ ou le détecteur de présence selon un aspect de l'invention peut présenter une ou plusieurs caractéristiques complémentaires parmi les suivantes, considérées individuellement ou selon toutes les combinaisons techniquement possibles :

Selon un mode de réalisation du procédé de configuration, l'étape d'acquisition de caractéristiques physiques de l'espace est réalisée à l'aide d'une interface homme machine, tel qu'un écran tactile, un clavier et un écran etc., du dispositif de configuration par un utilisateur.

Selon une variante de ce mode de réalisation du procédé de configuration, l"étape d'acquisition de caractéristiques physiques de l'espace comprend une sous-étape de réception de caractéristique de dimensionnement de la pièce transmise par le détecteur de présence lors de son initialisation.

Selon un exemple de ces modes de réalisations du procédé de configuration, dans lequel les caractéristiques physiques de l'espace comprennent des caractéristiques de dimensionnement de la pièce qui sont la largeur, la hauteur, la longueur de la pièce. Selon un exemple, les caractéristiques de dimensionnement comprennent aussi la forme.

Selon un exemple de ces modes de réalisations du procédé de configuration les caractéristiques physiques de l'espace comprennent le nombre de zones à détecter une présence.

Selon un exemple de ces modes de réalisations du procédé de configuration les caractéristiques physiques de l'espace comprennent des caractéristiques de dimensionnement des zones à détecter, par exemple longueur, largeur. Selon un exemple, les caractéristiques physiques de l'espace comprennent la sélection de zones d'intérêts à détecter accoler ou distante.

Selon un exemple, les caractéristiques physiques comprennent le nombre de zones d'intérêts dans des zones spécifiques d'exclusion à détecter. Par zone d'exclusion, on entend une zone dans laquelle le détecteur de présence ne recherche ou ne remonte pas l'information d'une présence.

Selon un mode de réalisation du procédé de configuration, l'étape de sélection d'une image prédéterminée comprend une sous étape de proposition d'une pluralité d'agencement de zones d'intérêts et une sous étape de validation des agencements de zones d'intérêts.

Selon un exemple de ce mode de réalisation du procédé de configuration, la sous étape de proposition comprend l'affichage d'une liste d'images prédéterminées correspondant aux caractéristiques physiques acquises et une sous étape de validation de l'image prédéterminée par l'utilisateur.

Selon un mode de réalisation du procédé de configuration, l'étape de détermination d'indexation comprend une sous étape de validation du détecteur de présence par rapport à l'index.

Par exemple, la sous-étape de validation du détecteur de présence par rapport à l'index comprend une image prédéterminée comprenant le symbole du détecteur de présence centré dans l'image prédéterminée et de l'index sur la périphérie de l'image.

Selon un mode de réalisation du procédé de configuration, l'étape de détermination d"indexation comprend une sous étape d'affichage d'une pluralité de différents symboles indexes dont des pictogrammes d'ouverture de l'espace et une sous étape de validation du symbole index et de validation de la position de l'index.

Selon un mode de réalisation du procédé de configuration, l'étape de préréglage d'au moins une zone d'intérêt peut comprendre une sous étape de redimensionnement de la zone d'intérêt.

Selon un mode de réalisation du procédé de configuration, l'étape de préréglage d'au moins une zone d'intérêt peut comprendre une sous étape de configuration d'une zone d'exclusion.

Selon un mode de réalisation du procédé de configuration, l'étape de préréglage de zone peut comprendre une sous étape de paramétrage angulaire du champ de vision de l'imageur (capteur d'image) du détecteur de présence par rapport aux zones d'intérêts.

Selon un mode de réalisation du procédé de configuration, le procédé de configuration comprend une étape d'appareillage avec le détecteur de présence.

Selon un mode de réalisation du procédé de configuration, comprenant en outre après l'étape de transmission d'au moins une zone au détecteur d'imagerie, une étape de demande d'image du dispositif. Cela permet à l'utilisateur de vérifier le ou les emplacements des zones d'intérêts des images.

Selon un exemple de ce mode de réalisation, le procédé de configuration comprend une étape de validation ou modification des emplacements et dimensions des zones d'intérêts et une deuxième étape de transmission de données d'au moins une zone modifiée si celle-ci est modifiée sinon une étape de confirmation des données de zones d'intérêts transmises.

Selon un mode de réalisation du procédé d'initialisation, comprenant une étape de mesure de l'espace par le détecteur de présence et une étape de transmission des mesures par le biais du moyen de communication.

Selon un mode de réalisation du procédé d'initialisation, comprenant une étape de détection d'un repère ou des repères sur une image reçue du capteur d'image correspondant à l'index ou les indexes repères déterminés reçus par le dispositif de configuration et une étape d'indexation angulaire des zones d'intérêts sur l'image en fonction du repère détecté.

Selon un mode de réalisation du procédé d'initialisation, comprenant une étape de réception d'une requête mode expert et une étape d'envoie par le moyen de communication du détecteur un fichier d'image, par exemple raw ou jpeg au dispositif de configuration et une étape de réception par le moyen de communication des données d'au moins une zone d'intérêt configurée à surveiller sur l'image.

Selon un mode de réalisation du détecteur, le capteur d'image est un imageur dans le domaine du visible pour capturer les images de la scène.

Par imageur dans le domaine du visible, on entend un imageur ayant un spectre visible qui est globalement compris entre 400nm (bleu) et 800nm (rouge).

Selon un mode de réalisation du détecteur, le capteur d'image est un capteur infrarouge ou infrarouge proche utilisé pour capturer les images de la scène.

Par infrarouge proche on entend la partie du spectre lumineux comprise entre 800nm et 1µm environ et par infrarouge on entend au-delà de 1µm utilisé pour l'imagerie thermique.

Selon un mode de réalisation du détecteur comprenant en outre une optique pour le capteur d'image.

Selon un mode de réalisation du détecteur, l'unité de détection comprend un processeur et une mémoire comprenant les données transmises par le dispositif de configuration.

Selon un mode de réalisation du détecteur, l'unité de détection est configurée pour réaliser les mesures à l'aide d'un algorithme de calcul de l'espace par le champ de vision du capteur d'image.

Selon un autre exemple de ce mode de réalisation, le détecteur comprend un dispositif de mesure par onde, par exemple infrarouge, par exemple un télémètre ou encore un radar ou encore de technologie Lidar.

Selon un autre exemple de ce mode de réalisation, le calcul de l'espace est réalisé à l'aide d'un algorithme calculant des distances sur l'image du capteur d'image.

Selon un mode de réalisation du détecteur de présence, l'unité de détection est configurée pour uniquement transmettre des données de valeurs de mesure ou de liste d'occupation (état d'une présence détectée ou libre) pour chaque zone par le moyen de communication.

En outre un tel système comprenant ce détecteur de présence permet d'éviter un piratage de l'image du détecteur de présence comprenant le capteur d'image puisque ce dernier peut être dépourvue de moyen pour transmettre l'image. Ainsi le détecteur peut être moins couteux. En outre un tel avantage, permet pour certain pays où il est interdit ou obligatoire de signaler que les personnes soient filmées, d'installer ce type de détecteur sans signaler aux utilisateurs qu'ils sont filmés puisque les images ne sont ni enregistrées ni transmissible par le détecteur et donc pas visualisable par un utilisateur.

Selon un mode de réalisation du détecteur de présence, le détecteur de présence comprend un moyen de mesure de l'espace et en ce qu'il est configuré pour transmettre ces mesures au dispositif de configuration.

Selon un mode de réalisation du détecteur de présence, le détecteur de présence comprend un boîtier comprenant un repère. Le repère permet lors de l'installation de correspondre angulairement avec l'index repère. Cela permet de disposer le détecteur de présence en vis-à-vis de l'index repère choisi.

Selon un exemple, le boîtier a un capot ayant une forme symétrique, par exemple un centre de symétrie formant un rectangle, ou un carré ou un rond. Le repère permet ainsi à l'installateur du détecteur de présence ou au configurateur (l'utilisateur du dispositif de configuration) de se repérer, par exemple soit en installant le boîtier en ayant le repère en vis-à-vis de l'index choisi par le configurateur, soit en configurant l'index repère en fonction de l'emplacement du repère sur le boîtier dans l'espace. Un tel repère est particulièrement requis en cas de boîtier circulaire.

Selon une variante du mode de réalisation du détecteur de présence, l'unité de détection est configurée pour permettre de détecter le repère ou les repères sur une image reçue du capteur d'image correspondant à l'index ou les indexes repères déterminés et en ce qu'elle configure les zones d'intérêts sur l'image en fonction du repère détecté.

L'invention concerne aussi un procédé de surveillance d'occupation d'une zone d'intérêt par un détecteur de présence selon l'invention comprenant des étapes de :
- réception d'une image reçue du capteur d'image,
- de recherche dans chaque zone d'intérêt délimitée dans le procédé de configuration, un objet (humain ou affaire humaine),
- d'attribution d'un état libre ou occupé en fonction d'une détection de l'objet dans chaque zone d'intérêt,
- de transmission par le moyen de communication une donnée d'information à chaque changement d'état libre à occupé ou d'occupé à libre d'une zone d'intérêt.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] montre une représentation schématique d'une situation d'un détecteur de présence dans un espace.
[Fig. 2] représente schématiquement un système comprenant le détecteur de présence et un dispositif de configuration.
[Fig. 3] montre une représentation schématique d'un procédé de configuration de zones d'intérêts selon l'invention.
[Fig. 4] montre une représentation schématique de différents affichages d'un dispositif de configuration selon l'invention réalisant le procédé de configuration de la figure 3 dans le cas de situation représenté en figure 1.
[Fig. 5] montre une représentation schématique d'un procédé d'initialisation selon l'invention.
[Fig. 6] montre une représentation schématique d'un autre exemple de situation différent de celui de la figure 1.
[Fig. 7] montre une représentation schématique de différents affichages d'un dispositif de configuration selon l'invention réalisant le procédé de configuration de la figure 3 dans le cas de situation représenté en figure 6.

### DESCRIPTION DETAILLEE

Les figures sont présentées à titre indicatif et nullement limitatif de l'invention.

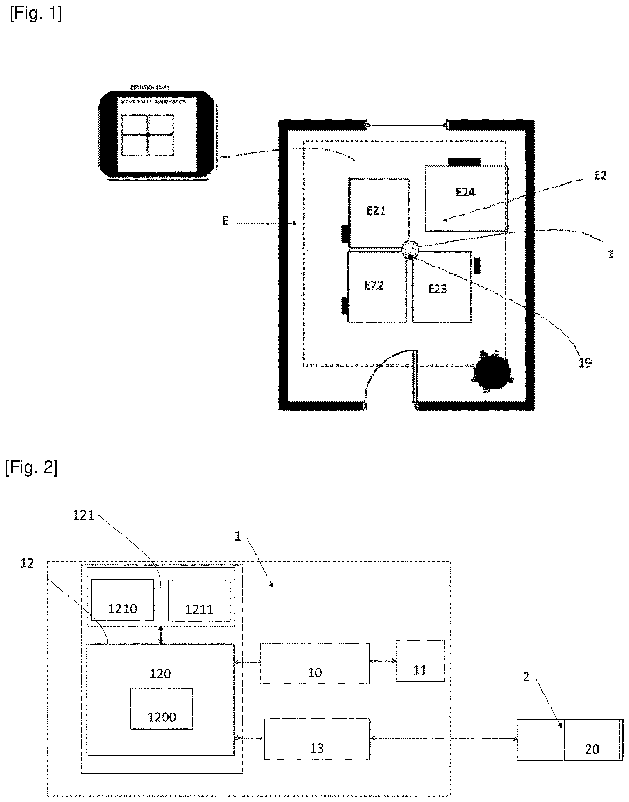

La figure 1 est une représentation schématique d'une situation d'un détecteur de présence 1 dans un espace E.

La figure 2 représente schématiquement un système S comprenant le détecteur de présence 1 et dispositif de configuration 2.

Le détecteur de présence 1 comprend un capteur d'image 10 en l'occurrence relié à une optique 11, une unité de détection 12 et un moyen de communication 13 pour recevoir des données de zones d'intérêts configurées par le dispositif de configuration 2.

Le dispositif de configuration 2 et le détecteur de présence 1 sont configurés pour s'appareiller et communiquer à l'aide du moyen de communication 13 et un moyen de communication correspondant du dispositif de configuration 2.

L'unité de détection 12 comprend une mémoire 121 et une unité de contrôle 120 comprenant un processeur 1200. La mémoire comprend des paramètres de contrôle et de détection 1210 pour que l'unité de contrôle 120 puisse détecter une présence ou une absence à partir de zones d'intérêts configurées dans l'image reçue provenant du capteur d'image 10.

Le capteur d'image 10 fournit donc l'image de son champ de vision E1 de la zone E. On peut voir sur la figure 1, que dans cet exemple le champ de vision du capteur d'image 10 par le biais de l'optique 11 ne couvre pas toute la pièce de l'espace E1, mais bien entendu cela pourrait être le cas.

La zone E comprend un espace de travail E2 comprenant en l'occurrence quatre bureaux E21, E22, E23, E24 dont trois identiques E21, E22, E23 et un quatrième de dimensionnement plus grand E24.

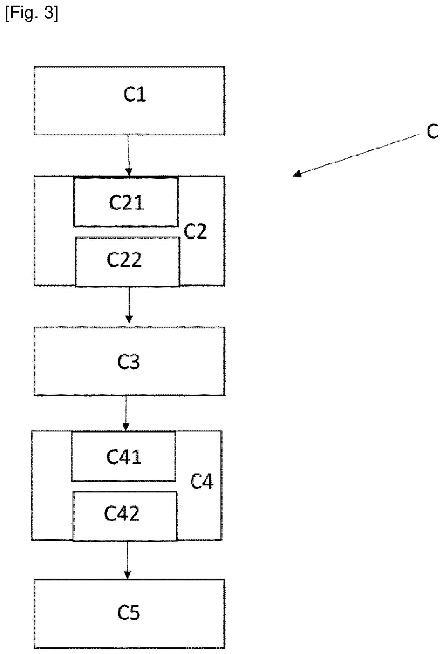

Le détecteur de présence 1 permet de détecter si un des bureaux de l'espace de travail E2 est occupé ou est libre. Le détecteur de présence 1 est donc configuré pour permettre de réaliser un procédé de surveillance d'occupation, ici de quatre zones d'intérêts Z1, Z2, Z3, Z4 correspondant à chaque bureau. Pour cela le détecteur de présence 1 reçoit des données des quatre zones d'intérêts configurées Z1, Z2, Z3, Z4 par le dispositif de configuration 2. Le dispositif de configuration 2 peut être un ordinateur, un smartphone, une tablette etc. mais différent du détecteur de présence 1. Le dispositif de configuration 2 est configuré pour réaliser un procédé de configuration C d'au moins une zone d'intérêt Z1, Z2, Z3, Z4 d'un espace situé dans un champ de vision d'un capteur d'image d'un détecteur de présence représenté en figure 3. Le dispositif de configuration comprend une interface homme/machine 20 permettant à un utilisateur de paramétrer les zones d'intérêts Z1, Z2, Z3, Z4.

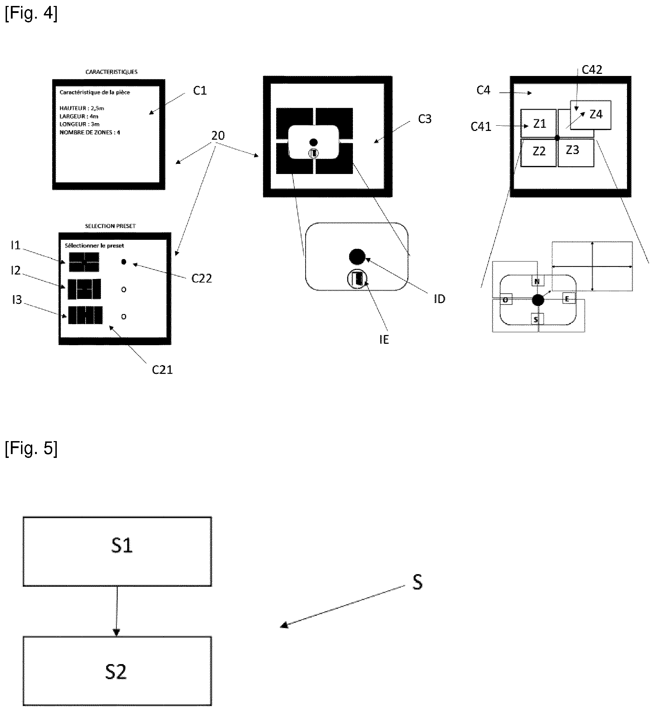

Le procédé de configuration C comprend une étape d'acquisition C1 de caractéristiques physiques de l'espace dans lequel le détecteur de présence 1 devra détecter des présences, en l'occurrence, l'espace E comprenant les 4 zones d'intérêts Z1, Z2, Z3, Z4. Cette étape d'acquisition est réalisée par le biais de l'utilisateur qui saisie ces caractéristiques avec l'interface homme/machine 20 qui peut être un écran tactile ou encore un écran et un clavier. La figure 4 représente un exemple de l'affichage sur l'interface homme/machine 20 pour la configuration des zones d'intérêts Z1, Z2, Z3, Z4.

Les caractéristiques physiques de l'espace E comprennent en l'occurrence des caractéristiques de dimensionnement de la pièce de l'espace E, ici hauteur, largeur et longueur qui sont donc saisie par l'utilisateur.

Dans cet exemple, le procédé de configuration peut en outre connaître la surface d'exploitation fonction du champ de vision par le capteur d'image 10 du détecteur de présence 1 qui en fonction de la hauteur et potentiellement du réglage de l'optique 11 s'il comprend un zoom. Le procédé de configuration peut comprendre une sous étape d'information si l'espace E sera partiellement ou entièrement couvert par le détecteur de présence 1. En l'occurrence dans cet exemple, le champ de vision ne couvre pas toute la surface du sol de la pièce E.

D'autres caractéristiques peuvent être acquises, par exemple la taille des ou de chaque zone d'intérêt Z1, Z2, Z3, Z4 ou le nombre de zone d'exclusion ou encore une sélection de zones d'intérêts accoler ou distante les unes des autres.

Le procédé de configuration C comprend ensuite une étape de sélection C2 d'une image prédéterminée I1 en fonction des caractéristiques physiques acquises.

L'étape de sélection C2 comprend ici une sous étape de proposition C21 d'une pluralité d'agencement de zones d'intérêts C21 consistant à l'affichage d'une liste d'images prédéterminées correspondant aux caractéristiques physiques acquises. Ici trois images I1, I2, I3 correspondant chacun à trois possibilités d'agencement des quatre zones d'intérêts Z1, Z2, Z3, Z4.

L'étape de sélection C2 comprend une sous étape de validation C22 de l'image prédéterminée I1 par l'utilisateur. Ainsi l'agencement de zones d'intérêts Z1, Z2, Z3, Z4 sont préréglées.

Le procédé de configuration C comprend en outre une étape de détermination d'indexation C3 du détecteur de présence 1 sur l'image I1 sélectionnée comprenant un symbole d'index repère IE et un symbole du détecteur de présence ID, déplaçable sur l'image sélectionnée I1 par une interface machine/utilisateur 20.

Cela permet d'indexer le détecteur de présence 1 à installer par rapport à l'image sélectionnée I1 ou l'inverse d'indexer l'image sélectionnée I1 par rapport au détecteur de présence 1 déjà installé.

En l'occurrence, l'utilisateur choisi un symbole d'index repère IE d'une porte d'entrée. Le détecteur de présence 1 comprend un boîtier comprenant un repère 19 pour permettre de disposer le détecteur de présence en vis-à-vis de l'index repère choisi. Dans cet exemple, le boîtier est circulaire et le repère 19 sur le boîtier permet d'installer le détecteur de présence en ayant le repère 19 vers la porte. Un tel repère 19 permet ainsi au détecteur de présence 1 d'identifier facilement les zones à partir de l'image du capteur d'image 10 par le biais de l'optique 11 qui est fixe par rapport au repère 19. Dans cet exemple le repère 19 est en vis à de la porte.

Selon un autre exemple, le symbole d'index repère IE est un des points cardinaux et le détecteur de présence 1 comprend une boussole permettant de déterminer l'orientation des zones d'intérêts Z1, Z2, Z3, Z4 dans une image du capteur d'image 10.

Sur la figure 4, on peut voir que le procédé de configuration permet à l'utilisateur d'agrandir ou rétrécir une image sur l'écran du dispositif de configuration pour déplacer et valider l'index IE en direction de la porte et l'index du détecteur ID.

L'étape d'indexation C3 comprend une sous étape de validation du détecteur de présence 1 par rapport à l'index IE et des zones d'intérêts Z1, Z2, Z3, Z4.

Le procédé de configuration C comprend en outre une étape de préréglage C4 d'au moins une zone d'intérêt Z1, Z2, Z3, Z4 comprenant une sous étape de définition C41 de chaque zone d'intérêt Z1, Z2, Z3, Z4 correspondant ici respectivement à chaque bureau E21, E22, E23, E24 et une sous étape de configuration C42 d'au moins une zone d'intérêt Z1, Z2, Z3, Z4 dans l'image configurée I1. Par définition on entend définir chaque zone par exemple un nom, un numéro, un label etc afin que l'utilisateur puisse reconnaitre le bureau occupé ou libre lorsqu'il visionne les données sur son dispositif reçu du détecteur de présence 1 directement ou par le biais d'un serveur.

Dans l'exemple illustré en figure 4, la configuration de la zone d'intérêt Z4 est un déplacement et une modification de taille en l'occurrence un agrandissement.

Dans ce mode de réalisation représenté, les étapes C2, C3 et C4 sont réalisées dans l'ordre représenté, mais bien entendu elles peuvent être effectués dans différent ordre ainsi que leur sous étapes peuvent être effectuée séparément et dans un ordre inverse dans la mesure du possible. Par exemple la sous étape de configuration C42 peut être effectué avant l'étape de détermination. Il en va de même pour la sous étape de définition C41 qui peut être effectué lors de la saisie des caractéristiques des zones des caractéristiques physiques de l'espace E.

Une fois ces quatre étapes réalisées, chaque zone d'intérêt est configurée et le procédé de configuration comprend une dernière étape de transmission C5 de données d'au moins une zone d'intérêt configurée, ici en l'occurrence les quatre zones Z1, Z2, Z3, Z4, au détecteur de présence 1.

Le procédé de configuration C peut donc être réalisé avant même l'installation du détecteur de présence 1 dans la pièce E et permet en outre d'éviter un transfert d'image du détecteur de présence 1 au dispositif de configuration pour la configuration des zones d'intérêts. Cela permet donc d'avoir un détecteur de présence comprenant moins de puissance de calcul que dans l'art antérieur tout en étant aussi efficace et plus rapide pour l'installateur.

Le détecteur de présence 1 comprend donc un procédé d'initialisation S représenté en figure 5 comprenant une étape de réception S1 par le moyen de communication 13 des données des quatre zones d'intérêts Z1, Z2, Z3, Z4 configurées par le dispositif de configuration. Bien entendu, le procédé d'initialisation peut comprendre une étape d'appareillage permettant la communication entre le dispositif de configuration 2 et le détecteur de présence 1.

Le procédé d'initialisation S comprend aussi une étape de configuration S2 par l'unité de détection 1 des quatre zones d'intérêts Z1, Z2, Z3, Z4 de l'espace E située dans le champ de vision E1 à partir des données des zones d'intérêts 1211 reçues.

Ces données de zones d'intérêts 1211 sont mémorisées dans la mémoire 121 de l'unité de détection, pour permettre à un procédé de détection de présence d'identifier une présence dans au moins une zone d'une image reçue du capteur d'image 10.

Ainsi le procédé d'initialisation est dépourvu d'étape de transmission par le moyen de communication 13 de données d'une image provenant du capteur d'image 10.

Par exemple, l'unité de détection 12 du détecteur de présence 1 est configuré pour effectuer un procédé de surveillance d'occupation comprenant une étape de réception d'une image reçue du capteur d'image 10, une étape de recherche dans chaque zone d'intérêt délimitée à partir des données de zones d'intérêts, un objet (humain ou affaire humaine). La recherche peut être réalisée par exemple en comparant une image mémorisée de chaque zone d'intérêt dans un état libre et une comparaison avec celle-ci. Le procédé de surveillance comprend en outre une étape d'attribution d'un état libre ou occupé en fonction de la détection de l'objet dans chaque zone d'intérêt Z1, Z2, Z3, Z4 et une étape de transmission par le moyen de communication 13 d'une liste d'occupation ou d'une donnée d'information des états d'une zone d'intérêt à chaque changement d'état libre à occupé ou d'occupé à libre d'une des zones d'intérêts Z1, Z2, Z3, Z4. La transmission de cette liste d'occupation peut être au dispositif de configuration ou un autre dispositif permettant à un utilisateur de visualiser la liste sur un écran, tel que par le biais d'un serveur comprenant une plateforme accessible par l'utilisateur.

En particulier, dans ce premier mode de réalisation, l'unité de détection 1 est configurée pour uniquement transmettre des données de liste d'occupation pour chaque zone par le moyen de communication 13 et recevoir les données de zones d'intérêts 1211.

Selon cet exemple de ce mode de réalisation, le moyen de communication 13 permet une communication par le biais d'un réseau sans fil tel que le WIFI ou Bluetooth.

Le moyen de communication 13 peut donc aussi être un modem et une antenne pour Réseaux sans fil à Basse Consommation et Longue Distance la catégorie des LPWAN qui requiert peu d'énergie. Le détecteur de détection peut comprendre une batterie pour alimenter l'unité de détection 1, le capteur d'image 10 et le moyen de communication 13 ou être alimenté par un réseau. Le moyen de communication peut aussi être réalisé à l'aide d'un câble de communication ou encore avoir un modem courant porteur pour recevoir et/ou envoyer les données par un réseau électrique par CPL.

Dans un deuxième exemple, le détecteur de présence 1 comprend un moyen de communication 13 adapté pour transmettre l'image du capteur d'image 10 soit au dispositif de configuration 2 ou au dispositif permettant de visualiser la liste d'occupation.

En outre, dans ce deuxième exemple le dispositif de configuration 2 peut comprendre après le procédé de configuration, une étape de proposition de mode expert ou de validation comprenant une étape de transmission de la requête de surveillance ou d'expert et une étape de surveillance de réception d'une image comprenant au moins l'image du capteur d'image et une étape d'affichage d'une image superposée comprenant l'image reçue et des délimitations de chaque zone d'intérêt sur l'image assemblée transmise par le moyen de communication 13. L'utilisateur peut ainsi modifier l'emplacement ou la taille des zones si besoin par le biais de l'interface 20 et le dispositif de configuration retransmet soit une validation ou une modification des données des zones d'intérêts modifiées. Le procédé d'initialisation comprend alors une étape de réception d'une requête mode expert et une étape d'envoi par le moyen de communication 13 du détecteur un fichier d'image, par exemple jpeg au dispositif de configuration et une étape de réception par le moyen de communication 13 d'une validation ou des données d'au moins une zone d'intérêt modifiée.

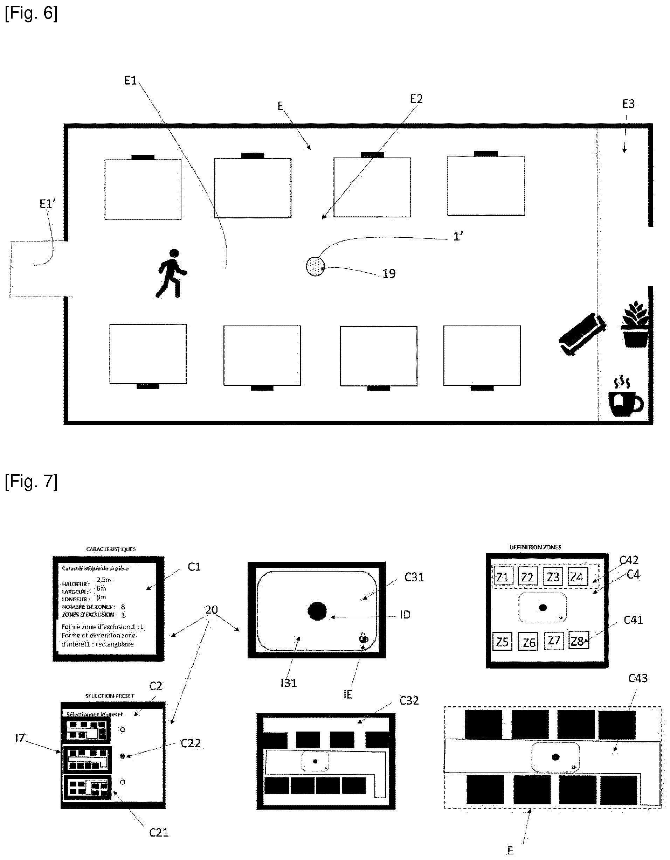

La figure 6 représente un deuxième cas de figure comprenant un détecteur de présence 1' selon un deuxième mode de réalisation différent du premier mode de réalisation en ce que le procédé de configuration C est différent. Par exemple l'étape d'acquisition C1 est différente en que les caractéristiques physiques de l'espace à sélectionner dans l'étape d'acquisition C1, comprennent d'autres caractéristiques, notamment la forme de l'espace de travail, le nombre de zone d'exclusion, la forme de la zone d'exclusion, la forme de chaque zone d'intérêt.

Dans ce deuxième cas de situation, l'espace E comprend huit bureaux (deux lignes de quatre bureaux), un couloir, comprenant un passage d'entrée, un passage de sortie et un espace café.

Dans ce deuxième cas de situation, le détecteur de présence 1' à un champ de vision E1 comprenant une zone E1' en dehors de la pièce de l'espace E, un espace de travail E2 séparé en deux zones de travail par le couloir. L'espace E comprend une zone E3 de cette pièce qui est en dehors du champ E1. Les mesures de la pièce par l'utilisateur peuvent donc être le champ de vision E1 moins la zone E1' plus la zone E3. Un troisième cas de figure aurait été de décaler le détecteur de présence 1 pour être centré dans la pièce et non sur l'espace de travail E2.

Dans ce deuxième cas de situation, le détecteur de présence 1' doit ne pas surveiller ce couloir entre les deux lignes de bureaux ni la partie en dehors de cette pièce.

Le détecteur de présence 1' comprend aussi un boîtier comprenant un repère 19, ici en vis-à-vis de la porte de la machine à café.

Le repère 19 sur ce boitier du détecteur de présence 1' ou celui de la figure 1, peut être une marque physique telle qu'une couleur différente du boitier, une saillie repérable par rapport à la surface du boîtier, un trou etc...

Le boîtier peut aussi avoir un capot comprenant le repère 19 ou permettant de recouvrir le repère 19 une fois le détecteur de présence installé pour améliorer l'esthétique tout en permettant l'optique 11 de fonctionner.

La figure 7 représente schématiquement les différents affichages du dispositif de configuration 2 selon les différentes étapes du procédé de configuration de la figure 3 dans ce deuxième cas de situation.

L'étape d'acquisition C1 comprend comme dans le premier mode de réalisation, les mesures de l'espace E1, ici acquise par un utilisateur comprenant la longueur et largeur, hauteur et le nombre de zones d'intérêts, ici en l'occurrence 8.

Les caractéristiques physiques de l'espace comprennent dans ce mode de réalisation en plus, la forme de l'espace de travail E2, le nombre de zone d'exclusion, ici l'utilisateur à sélectionner « 1 » dans la case correspondante de l'étape d'acquisition C1, la forme de la zone d'exclusion, ici l'utilisateur à sélectionner en « L » et la forme de chaque zone d'intérêt, ici rectangulaire.

Le dispositif de configuration 2 réalise l'étape de sélection C2 qui sélectionne donc dans sa liste d'agencement, les images d'agencements comprenant huit zones d'intérêts de forme rectangulaire et comprenant au moins une zone en forme de L.

Le dispositif de configuration 2 réalise donc la sous étape d'affichage C21 qui affiche donc cette liste d'agencement comprenant une pluralité d'images prédéterminées. Ici dans cet exemple, l'utilisateur sélectionne l'image prédéterminée I7 et le dispositif de configuration réalise la sous étape de validation C22 de l'image prédéterminée I2.

Dans cet exemple, l'étape de détermination d'indexation C3 du détecteur de présence 1 sur l'image I7 sélectionnée comprend une sous étape d'indexation C31 du symbole d'index repère IE d'un café et du symbole du détecteur de présence ID, déplaçable sur une image d'indexation I31, par l'interface machine/utilisateur 20.

L'étape de détermination d'indexation C3 comprend dans ce deuxième mode de réalisation en outre une sous étape C32 d'insertion de l'image d'indexation sur l'image sélectionnée I7 permettant ainsi d'indexer le détecteur de présence 1' sur l'image sélectionnée.

L'étape de préréglage C4 de chaque zone d'intérêt Z1, Z2, Z3, Z4, Z5, Z6, Z7, Z8 comprend comme dans le premier mode de réalisation la sous étape de définition C41 de chaque zone d'intérêt Z1, Z2, Z3, Z4, Z5, Z6, Z7, Z8 correspondant ici respectivement aux huit bureaux, et une sous étape de configuration C42 de chaque zone d'intérêt Z1, Z2, Z3, Z4 de la première ligne dans l'image configurée I7, ici en modifiant seulement l'écart de la ligne du haut qui peut se faire automatiquement en modifiant un seul bureau grâce à une sélection « espace régulier ». Enfin dans cet exemple, l'étape de préréglage C4 comprend en outre une sous étape de configuration C43 de la zone d'exclusion.

Selon un exemple, pour améliorer la précision des zones d'intérêts, dans ce deuxième cas de situation, le procédé de configuration peut comprendre dans l'étape d'acquisition C1, la distance entre chaque zone d'intérêt et le détecteur de présence 1'.

Le détecteur de présence 1' peut aussi être configuré pour reconnaitre une zone d'intérêt, ici en l'occurrence un bureau et donc appliquer les données de zones d'intérêts et d'exclusion en les adaptant à la reconnaissance de bureau. Contrairement à un détecteur de présence capable de s'autoconfigurer en identifiant seul des bureaux, il lui sera tout de même nécessaire de déterminer les noms des bureaux et en outre nécessitera d'avoir une puissance de calcul supérieur à celui de cet exemple de l'invention pour faire la distinction entre un bureau et une table car il n'aura aucune indication d'agencements des zones à surveiller ni d'identification des zones contrairement au détecteur de présence 1' de cet exemple de l'invention.

Selon un autre mode de réalisation, le détecteur de présence 1 est adapté à réaliser des mesures du champ de vision de son capteur d'image. Par exemple le détecteur comprend une unité de détection 12 configurée pour réaliser les mesures à l'aide d'un algorithme de calcul d'une image de l'espace par le champ de vision du capteur d'image 12.

Dans cet autre mode de réalisation, le procédé d'initialisation comprend une étape de mesure de l'espace E1 par le détecteur de présence 1 et une étape de transmission des mesures par le biais du moyen de communication 13 au dispositif de configuration 2.

Dans cet autre mode de réalisation, le procédé de configuration C comprend dans l'étape d'acquisition de caractéristiques physiques de l'espace une sous étape de réception des caractéristiques de dimensionnement de la pièce mesurée et transmise par le détecteur de présence 1' lors de son initialisation.

Le dispositif de présence 1 ou 1' peut fonctionner dans d'autres domaines, tel que la détection de véhicules dans une image provenant d'une caméra de surveillance pour la détection de places disponibles d'un parking dans une image provenant d'un dispositif de détection de présence ou de caméra de surveillance.

Sauf précision contraire, un même élément apparaissant sur des figures différentes présente une référence unique.

## Revendications

1. Procédé de configuration (C) d'au moins une zone d'intérêt (Z1, Z2, Z3, Z4, Z5, Z6, Z7, Z8) d'un espace (E) situé dans un champ de vision d'un capteur d'image (10) d'un détecteur de présence (1, 1'), le procédé de configuration (C) étant réalisé par un dispositif de configuration (2) comprenant :
- une étape d'acquisition (C1) de caractéristiques physiques de l'espace (E) via une saisie d'un utilisateur sur une interface homme/machine (20) du dispositif de configuration (2) ou via transmission par le détecteur de présence (1, 1'), les caractéristiques physiques de l'espace (E) comprenant des caractéristiques de dimensionnement de la pièce de l'espace (E),
- une étape de sélection (C2) d'une image prédéterminée (I1, I7) comprenant un agencement de zones d'intérêts (Z1, Z2, Z3, Z4, Z5, Z6, Z7,Z8), l'étape de sélection (C2) comprenant une sous étape de proposition (C21) d'une pluralité d'agencement de zones d'intérêts consistant en l'affichage d'une liste d'images prédéterminées correspondant aux caractéristiques physiques acquises et une sous étape de validation (C22) de l'image prédéterminée (I1, I7) par l'utilisateur,
- une étape de détermination d'indexation (C3) du détecteur de présence (1, 1') sur l'image (I1, I7) sélectionnée, l'étape de détermination d'indexation (C3) comprenant une sous étape de placement sur l'image (I1, I7) sélectionnée, d'un symbole d'index repère (IE) correspondant à l'espace (E) situé dans le champ de vision du capteur d'image (10) et d'un symbole de détecteur (ID) correspondant au lieu du détecteur de présence (1, 1'), par déplacement via l'interface homme/machine (20) et une sous étape de validation du positionnement du détecteur de présence (1, 1') par rapport à l'index repère (IE),
- une étape de préréglage (C4) d'au moins une zone d'intérêt (Z1, Z2, Z3, Z4, Z5, Z6, Z7, Z8) comprenant une sous étape de définition (C41) de chaque zone d'intérêt (Z1, Z2, Z3, Z4, Z5, Z6, Z7, Z8) et une sous étape de configuration (C42) de la position et/ou de la taille d'au moins une zone d'intérêt (Z1, Z2, Z3, Z4, Z5, Z6, Z7, Z8) dans l'image sélectionnée (I1, I7),
- une dernière étape de transmission (C5) de données (1211) d'au moins une zone d'intérêt (Z1, Z2, Z3, Z4, Z5, Z6, Z7, Z8) configurée, au détecteur de présence (1, 1').

2. Procédé de configuration (C) selon la revendication 1, dans lequel les caractéristiques de dimensionnement de la pièce sont la largeur, la hauteur, la longueur de la pièce.

3. Procédé de configuration (C) selon l'une quelconque des revendications précédentes, dans lequel l'étape de préréglage (C4) de zone d'intérêt (Z1, Z2, Z3, Z4, Z5, Z6, Z7, Z8) peut comprendre une sous étape de configuration (C43) d'une zone d'exclusion.

4. Dispositif de configuration (2) comprenant une interface homme/machine (20), configuré pour réaliser les étapes du procédé de configuration selon l'une des revendications précédentes, le dispositif de configuration (2) étant un appareil différent du détecteur de présence (1).

5. Procédé d'initialisation (S) d'un détecteur de présence (1, 1') comprenant un capteur d'image (10), un moyen de communication (13) et une unité de détection (12), le procédé comprenant une étape de
- réception (S1) par le moyen de communication (13) de données (1211) d'au moins une zone d'intérêt (Z1, Z2, Z3, Z4, Z5, Z6, Z7, Z8) configurée par un dispositif de configuration, dans lequel le détecteur de présence (1, 1') est configuré pour ne pas envoyer de paquet de données comprenant la taille d'une première image du capteur d'image (10) au dispositif de configuration (2) avant la réception de ces données (1211) d'au moins une zone d'intérêt (Z1, Z2, Z3, Z4, Z5, Z6, Z7, Z8),
- configuration (S2) par l'unité de détection (12) d'au moins une zone d'intérêt (Z1, Z2, Z3, Z4, Z5, Z6, Z7, Z8) d'un espace (E) situé dans un champ de vision (E2) du capteur d'image (10) à partir des données (1211) d'au moins une zone d'intérêt (Z1, Z2, Z3, Z4, Z5, Z6, Z7, Z8) reçues, pour permettre à un procédé de détection de présence d'effectuer des détections dans au moins une zone d'intérêt sur une image reçue du capteur d'image (10).

6. Détecteur de présence (1, 1') comprenant un capteur d'image (10), un moyen de communication (13) pour recevoir des données (1211) de zones d'intérêts définies et configurées par un dispositif de configuration (2) et une unité de détection (12) configurée pour à chaque initialisation attendre la réception par le moyen de communication (13) des données (1211) d'au moins une zone d'intérêt définie à surveiller avant de transmettre un paquet de données (1211) d'une image reçue du capteur d'image (10) au moyen de communication (13).

7. Détecteur de présence (1, 1') selon la revendication précédente, dans lequel le capteur d'image (10) est un capteur infrarouge ou infrarouge proche utilisée pour capturer les images de la scène.

8. Détecteur de présence (1, 1') selon la revendication 6, comprenant un imageur dans le domaine du visible pour capturer les images de la scène.

9. Détecteur de présence (1, 1') selon l'une quelconque des revendications 6 à 8 comprenant un boîtier comprenant un repère (19).
